# EUROPEAN PATENT SPECIFICATION

(11) **EP 0 494 466 B1**
(45) Date of publication and mention of the grant of the patent: **10.08.1994**
(21) Application number: 91203101.0
(22) Date of filing: 27.11.1991
(51) Int. Cl.: A01G 9/14, A46B 13/06

(54) **Powered brush device for cleaning roofs**
Angetriebenes Bürstengerät für das Säubern von Dächern
Système de brosses entrainées pour nettoyer des toits

(30) Priority: 11.01.1991 NL 9100036
(43) Date of publication of application: 15.07.1992
(73) Proprietor: Hoeymakers, Pieter Jan Hendrik, NL-5961 NZ Horst (NL)
(72) Inventor: Hoeymakers, Pieter Jan Hendrik, NL-5961 NZ Horst (NL)
(74) Representative: Vollebregt, Cornelis Jacobus, Ir.

(56) References cited:
- DE-B- 1 298 355
- TUINDERIJ vol. 68, no. 21, 13 October 1988, DOETINCHEM NL pages 24 - 25; R.BAKKER: 'Automatische bezem zorgt voor schoon glas'
- WORLD PATENTS INDEX LATEST Week 8410, 1984 Derwent Publications Ltd., London,GB; AN 84-061616-10
- WORLD PATENTS INDEX LATEST Week 8716, 1987 Derwent Publications Ltd., London,
- GB; AN 87-11441-16

## Description

The invention relates to a device for cleaning surfaces, said device being provided with a frame supported by ground wheels, which is to be driven by drive means, with brush means supported by said frame, which are to be rotated by drive means, as well as with means for supplying water to said brush means.

Such devices, which are e.g. used for cleaning the roofs of greenhouses and Dutch-type greenhouses, are e.g. described in DE-B-1,298,355, SU-A-1017220 and in the Dutch journal "Tuinderij", volume 68, No. 21, 13 October 1988, pp. 24 - 25. For driving the various parts use is generally made thereby of an electromotor mounted on the frame of the device, said electromotor being powered via a cable, which can e.g. be wound on and unwound from a reel mounted on the frame. In addition to that pipes and the like are provided for the supply of water, which is generally supplied under pressure via a hose connected to a stationary pump.

The use of such an electromotor, which is powered by means of a cable to be wound and unwound, involves certain risks, also in view of the wet environment in which the operations take place.

The object of the invention is to overcome the drawbacks of this known device.

According to the invention this can be achieved in that the device is provided with a drive mechanism to be operated by pressurized water, so as to drive the ground wheels and the brush means, as well as with means for supplying the water used for operating the drive mechanism to said brush means.

When using the construction according to the invention the water supplied to the device under pressure is utilized for driving the device and the brush means journalled in said device, as well as for cleaning the surfaces, by supplying the water used for said drive to the brush means.

According to a further aspect of the invention the device is supported by ground wheels located near the centre of the device, whilst the brush means are arranged on either side of the ground wheels, this in contrast to the more conventional devices, where the ground wheels supporting the device are arranged near the ends of the frame. This will result in a device having a construction which can be simply and easily adapted to the operating conditions, whereby the device can be moved in an even manner along surfaces to be treated.

The invention will be explained in more detail hereafter with reference to a few embodiments of the construction according to the invention diagrammatically illustrated in the accompanying Figures.

Figure 1 is a front elevational view of an embodiment of a device according to the invention.

Figure 2 is a plan view of the device shown in Figure 1, wherein certain parts have been left out so as to be able to show parts located thereunder more clearly.

Figure 3 is a side elevational view of the device shown in Figures 1 and 2, wherein certain parts have been left out.

Figure 4 is a diagrammatic front elevational view of a part of a second embodiment of a device according to the invention.

Figure 5 is a diagrammatic plan view of a part of the second embodiment.

Figure 6 is a diagrammatic side elevational view of parts of the device according to the second embodiment.

Figure 7 is a larger-scale, diagrammatic plan view of the blade wheel of the second embodiment.

Figure 8 is a side elevational view of the trough accommodating the blade wheel shown in Figure 7, with pipes, not shown in Figure 7, for the supply of water.

The frame of the device comprises two horizontal frame beams 1, which extend parallel to each other in the longitudinal direction of the device. Said frame beams function to support two ground wheels 2 arranged one behind the other, said ground wheels being rotatable about horizontal axes of rotation 3 extending perpendicularly to the longitudinal direction of the device. The ends of the frame beams 1 are interconnected by means of cross beams 4. To said cross beams 4 the lower ends of beams 5 and 6 respectively are attached, said beams 5, 6 extending upwards from the cross beams in question and with their upper ends being attached to a rectangular trough 7, which is open at its upper side.

Between the beams 5 and 6 a frame beam 8, which extends parallel to the beams 1, is provided at some distance above the beams 1.

Two U-shaped beams 9 and 10, extending vertically between the frame beams 1 and 8, are provided on either side of said frame beams 1 and 8. Vertically extending screwed spindles 11 are journalled in said frame beams 9 and 10, in such a manner, that said screwed spindles are rotatable about their longitudinal axis, whereby said screwed spindles are not axially movable with respect to the frame beams 9 and 10 in question, however.

The screwed spindles 11 are passed through threaded parts of coupling pieces 12, so that said coupling pieces 12 are vertically adjustable by means of the screwed spindles 11.

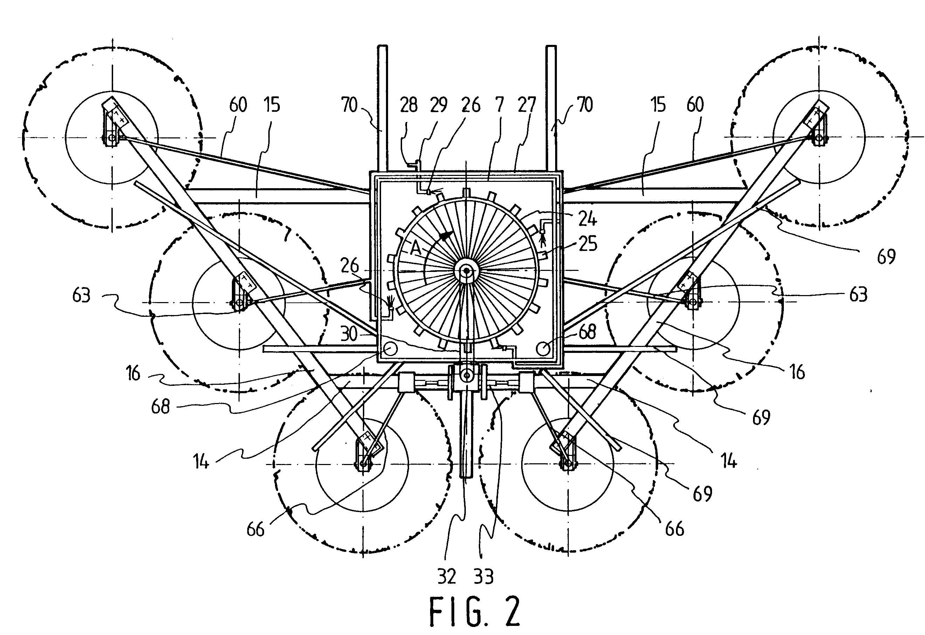

The ends of frame beams 14 and 15 are coupled to the coupling pieces 12 by means of horizontal pivot pins 13, which extend in the longitudinal direction of the device. As is apparent from Figure 2, the frame beams 14 and 15 extend outwards from the coupling pieces, whilst a further frame beam 16 is attached to the ends of the frame beams 14 and 15 remote from the coupling pieces 12, said frame beam 16 including an acute angle with the vertical longitudinal centre plane of the device.

In the illustrated embodiment each frame beam 16 supports three brush means 17, which can be rotated about axes of rotation 18 extending perpendicularly to the longitudinal direction of the frame beam 16. Each brush means 17 is thereby at least substantially built up of a disc 19 extending perpendicularly to the axis of rotation 18, hairs 20 being attached to said brush in such a manner, that said brush hairs form a body having the shape of a truncated cone.

Coupling rods 22, only diagrammatically indicated in the Figure, are provided between the frame beams 16 and the ends of a frame beam 21 arranged under the trough 7 and extending perpendicularly to the longitudinal direction of the device. The frame beams 16 carrying the brush means 17 can each be adjusted at a desired angle with respect to the horizontal, by rotating said frame beams about the pivot pins 13, and be fixed in their set position by means of the coupling rod 22 in question.

In the trough 7 a wheel 24 is rotatably disposed by means of an upright shaft 23. Outwardly extending blades 25 are mounted on the outer circumference of the wheel 24. Furthermore regularly spaced spraying nozzles 26 are provided spaced in circumferential direction in the trough 7, said nozzles being connected to a pipe 27.

A stub 29, which can be shut off by means of a cock 28, is furhtermore connected to the pipe 27, which stub may be used for connecting a hose (not shown) or the like, for supplying pressurized water from a pump or the like, to the pipe 27.

As will be apparent from Figure 2, the spray nozzles 26 are arranged in such a manner that water exiting from said spray nozzles under pressure will strike the blades 25, in a direction which is at least substantially tangential with respect to the wheel.

The shaft 23 is coupled, by means of a chain transmission 30, to the ingoing shaft 31, extending parallel to the shaft 23, of a right-angled gear transmission accommodated in a gear box 32.

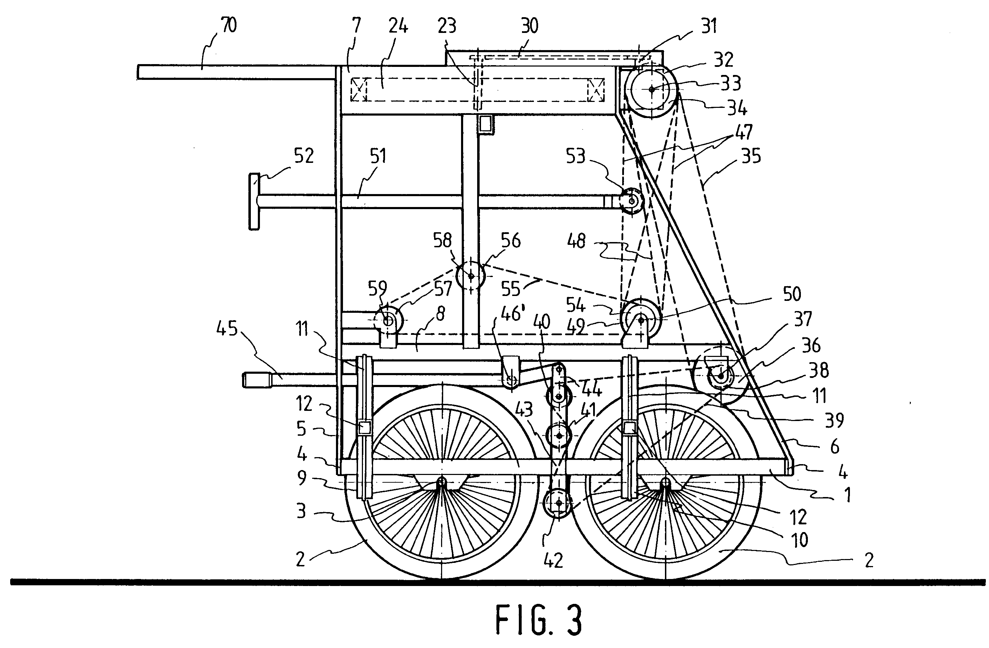

The outgoing shaft 33 of said gear transmission extends from either side of the gear box 32. A pulley 34 is mounted on the outgoing shaft 33, which pulley is coupled to a pulley 36 by means of a belt 35, said pulley 36 being mounted on a shaft 37 supported by the front end of the frame beam 8. A sprocket wheel 38 is secured to the shaft 37. A chain 39 is passed over said sprocket wheel 38, said chain furthermore being passed, in the manner illustrated in Figure 3, over three superimposed sprocket wheels 40 - 42, which are supported by a vertically extending carrying means 43 arranged between the two ground wheels 2. The two sprocket wheels 41 and 42 are thereby coupled to friction wheels.

The upper end of the carrying means 43 is thereby pivotally coupled to a lever 45 by means of a coupling piece 44, said lever being pivotally coupled to the frame by means of a pivot pin 46′.

By pivoting the lever 45 about the pivot pin 46′ either the friction wheel coupled to the sprocket wheel 42 or the friction wheel coupled to the sprocket wheel 41 can be pressed against the outer circumference of the right-hand (when seen in Figure 3) wheel 2.

A double pulley 46 is furthermore coupled to the outgoing shaft 33 of the gear box 32. Said double pulley 46 is coupled to a double pulley 49 by means of two belts 47 and 48, said double pulley 49 being mounted on a shaft 50 located at some distance below the gear box 32 and being supported by the frame. As appears from Figure 3 the belt 47 is thereby passed over the two pulleys 46 and 49 in a normal manner, whereas the belt 48 is crossed.

A control rod 51, which is journalled in the frame so as to be horizontally movable, is provided with a hand grip 52 at one end and with a roller 53 at its other end.

By moving the control rod 51 towards the right, when seen in Figure 3, said roller will engage part of the crossed belt 48 and thus tension said belt, whilst in that situation the belt 47 will be loosely provided around the two pulleys 46 and 49. If on the other hand the control rod 51 is pulled toward the left, when seen in Figure 3, the roller 53 will engage part of the belt 47 and thus tension the belt 47, whilst in that case the belt 48 will be loosely provided on the two pulleys 46 and 49.

A sprocket wheel 54 is furthermore provided on the shaft 50, over which a chain 55 is passed, which is also passed over two further sprocket wheels 56 and 57, which are mounted on shafts 58 and 59 respectively, which are journalled in the frame.

By means of intermediate shafts 60 the shaft 59 is coupled to gear transmissions 61, via which the two outermost brush means 17 secured to the frame beams 16 can be driven. In a similar manner the shaft 58 is coupled, by means of intermediate shafts 63 and gear transmissions 64, to the central one of the brush means 17 secured to the frame beams 16. The brush means 17 located closest together are driven via right-angled gear transmissions 65 connected to the ends of the outgoing shaft 33 of the gear box 32, intermediate shafts 66 and gear boxes 67 connected to the brush means 17 in question.

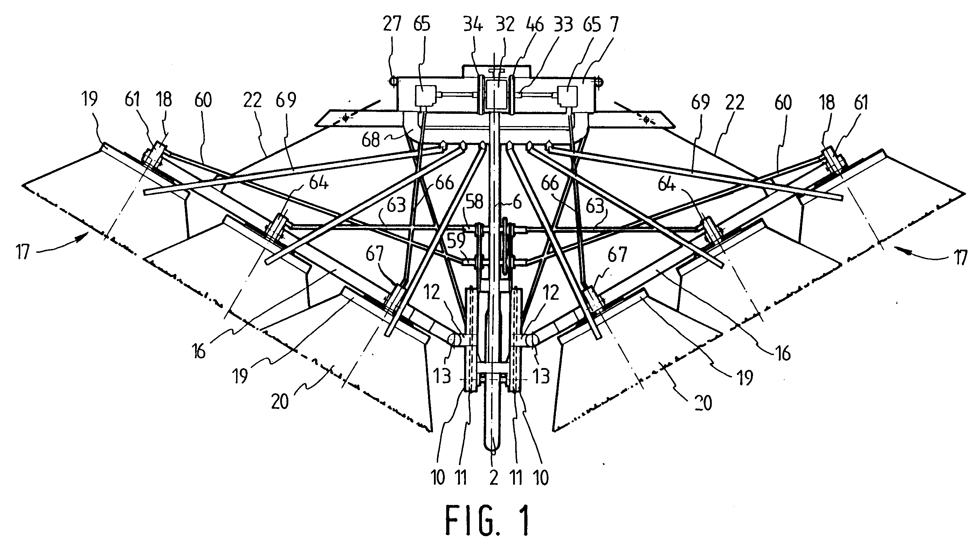

As is furthermore illustrated in Figure 1, the two ends of a pipe 68, which is bent so as to be U-shaped and which extends under the trough 7, is in open communication with the trough 7. Six discharge pipes 69 are connected to the pipe 68, said discharge pipes being constructed and arranged in such a manner that the end of each discharge pipe is located near one of the brushes 17.

Near the trough 7 two horizontally extending beams 70, which function as hand grips for controlling the device, are furthermore attached to the frame.

The device is e.g. in particular suited for cleaning the sloping roofs, largely comprised of panes, of greenhouses or Dutch-type greenhouses. For this purpose the two ground wheels 2 of the device are placed in a gutter, which is provided between two roof planes sloping upwards from said gutter in a direction remote from each other. In order to operate the device pressurized water is supplied to the pipe 27 by means of a pump or the like, and said pressurized water is forcefully squirted from the spray nozzles 26 against the blades 25 of the wheel 24. As a result of this said wheel 24 will be rotated in the direction according to the arrow A. Via the chain transmission 30, the right-angled gear transmission 32, the belt 35 and the pulley 36, said rotating motion is converted into a rotating motion of the shaft 37 and the sprocket wheel 38 mounted thereon. The two sprocket wheels 41 and 42 and the friction wheels secured to said sprocket wheels are thus rotated via the chain 39. From Figure 3 it will be apparent that the two sprocket wheels 41 and 42, casu quo the friction wheels connected thereto, thereby rotate in opposite directions.

As already explained above, by pivoting the lever 45 either the friction wheel connected to the sprocket wheel 41 or the friction wheel connected to the sprocket wheel 42 can be brought into contact with the right-hand (when seen in Figure 3) ground wheel 2, which will result in rotation of the ground wheel 2 in the one or the other direction, as a result of which the device will be moved to the right or to the left, when seen in Figure 3.

At the same time also the brush means 17 will be rotated via the above-described transmissions. The direction of rotation of the middle brush means and the outer brush means can be reversed by moving the control rod 51. The direction of rotation of the brush means 17 located closest together can be reversed by reversing the transmission mechanisms 65.

The water used for driving the wheel 24, and thus the ground wheel 2 in question and the brush means 17, will flow into the pipe 68 via the trough 7 and from said pipe 68, via the pipes 69, towards the brush means, so that this water is also used for cleaning the surfaces to be cleaned.

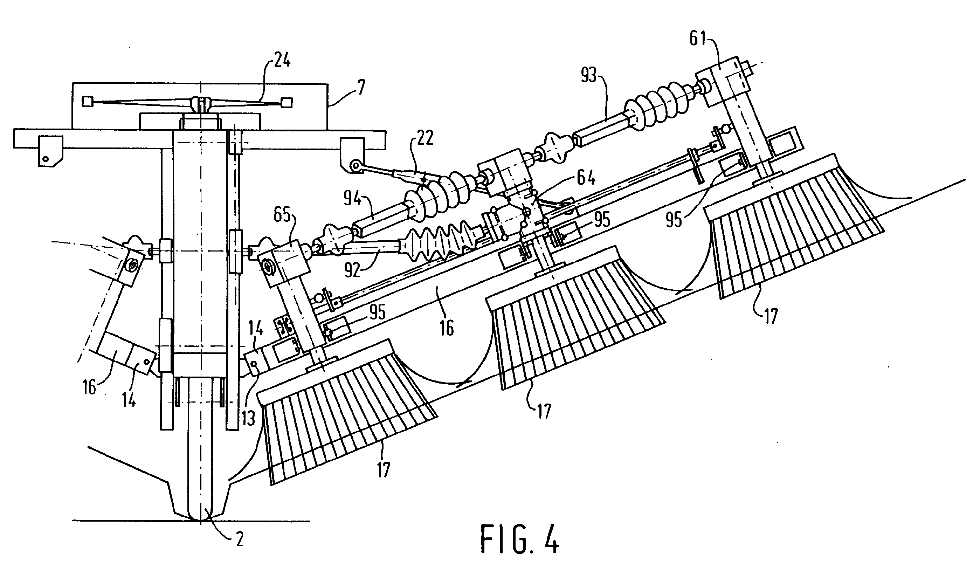

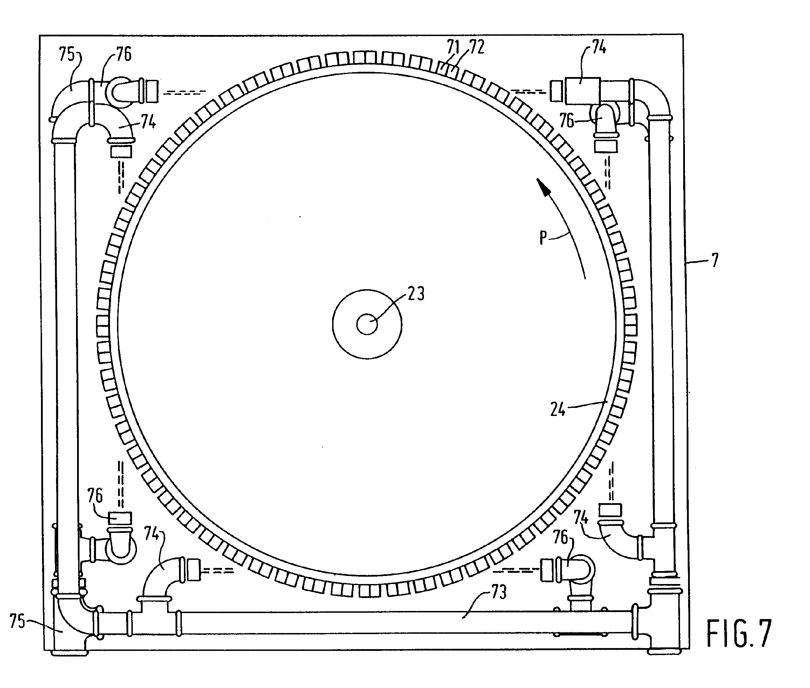

The construction of the device shown in Figures 4 - 8 largely corresponds with the construction of the device such as described above, and consequently like parts are numbered alike in the various Figures. Only those parts of the device according to the second embodiment that are essentially different from the embodiment according to Figures 1 - 3 will be discussed below.

With the device according to Figures 4 - 8 the blade wheel 24 is provided with pairs of blades 71 and 72, the blades 71 and 72 of each pair being arranged back to back in confronting relationship.

Furthermore a first pipe system 73 is disposed in the trough 7, to which pipe system a plurality of spray nozzles 74 are connected, which are directed in such a manner, that when pressurized water is squirted from said spray nozzles against the blades 72, the wheel 24 will rotate in the direction according to the arrow P.

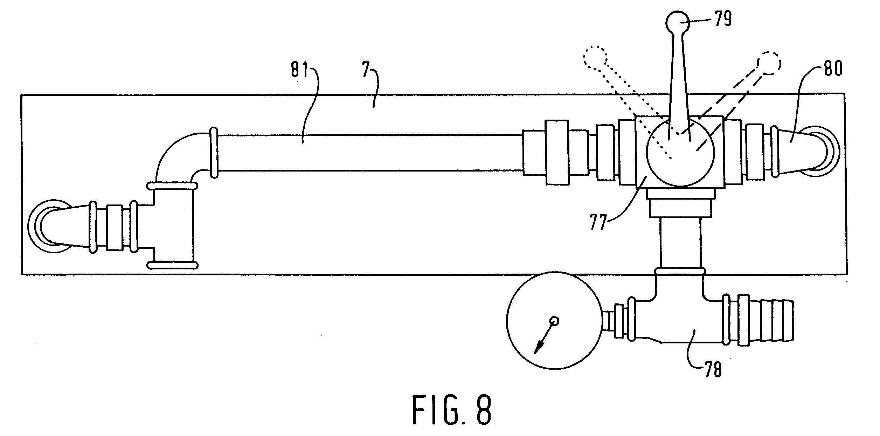

Furthermore a second pipe system 75 is disposed in the trough 7, to which a plurality of spray nozzles 76 are connected. The supply of pressurized water to the pipe system 73 or to the pipe system 75 can be controlled by means of a control valve 77 provided on the outside of the trough 7 (Figure 8). A connecting piece 78 is attached to the control valve 77, to which a hose or the like (not shown) for supplying pressurized water can be connected.

The control valve 77 can be manually controlled by means of a lever 79.

Via a first connecting piece 80 the control valve 77 is in communication with the pipe system 73, whilst the control valve 77 is in communication with the pipe system 75 via a connecting piece 81.

In the position of the lever 79 shown in full lines in Figure 8 the passage of water through the control valve 77 is shut off.

When the lever 79 is pivoted from the position shown in full lines towards the right, when seen in Figure 8, water will be supplied to the pipe system 73 via the connecting piece 80. When on the other hand the lever 79 is pivoted from the position shown in full lines towards the left, when seen in Figure 8, water will be supplied to the pipe system 75 via the connecting piece 81.

It will be apparent, that thus the direction of rotation of the blade wheel 24, and thus the direction of movement of the device, can be reversed in a simple manner, as will be described in more detail hereafter.

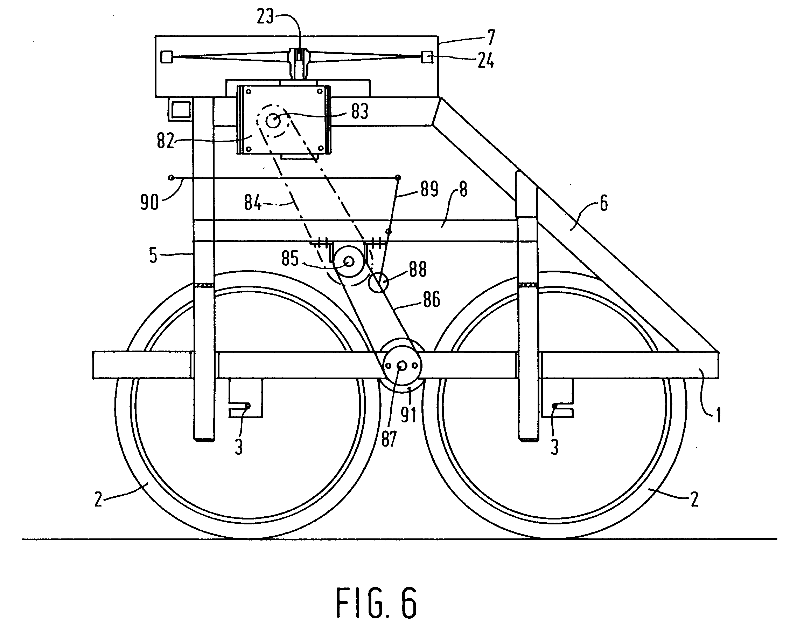

As is furthermore diagrammatically illustrated in Figure 6, the shaft 23 of the blade wheel is coupled to an outgoing shaft 83 via a worm gear or gear transmission accommodated in a casing 82, to which shaft a sprocket wheel forming part of a chain transmission 84 is secured. A shaft 85 extending parallel to the shaft 83 and to the axes 3 of the wheels 2 is coupled to the shaft 83 by means of a chain transmission 84. A pulley forming part of a belt transmission 86 is furthermore secured to the shaft 85. Said shaft 85 is coupled, by means of said belt transmission 86, to a shaft 87 journalled in the frame and extending parallel to the shaft 85. The belt of the belt transmission can be tensioned by means of a wheel 88, which is secured to the end of a lever 89 pivotally coupled to the frame. One end of a control rod 90 is coupled to the end of the lever 89 remote from the wheel 88.

A wheel 91 is furthermore secured to the shaft 87, said wheel abutting against the outer circumference of at least one wheel 2.

It will be apparent that when the blade wheel 24 is rotated in the one or the other direction in the above-described manner, also the shaft 85 can be rotated, via the transmission located in the gear box 82 and the chain transmission 84. By moving the control rod 90 the operator of the device can tension the belt of the belt transmission 86 as desired, so that also the shaft 87 and the friction wheel 91 secured thereto are rotated. The rotation of the wheel 91 is transmitted to the wheel(s) 2 supporting the device, so that said wheel(s) 2 will also be rotated. With a correct adjustment of the belt tension in the belt tranmission 86 said belt can slip when the device comes into contact with an obstacle.

The direction in which the wheel 2 is rotated, and also the direction of movement of the device, therefore, is of course dependent on whether the wheel 24 is rotated in the one or in the other direction.

With the second embodiment the middle brushes 17 are furthermore driven from the shaft 85 by means of intermediate shafts 92, which are provided between the shaft 85 and the gear boxes 64 in question.

In this embodiment the gear box 64 furthermore has two outgoing shafts, which are coupled, by means of further intermediate shafts 93 and 94, to the gear boxes 61 and 65, via which the two outer and inner brushes 17 are driven.

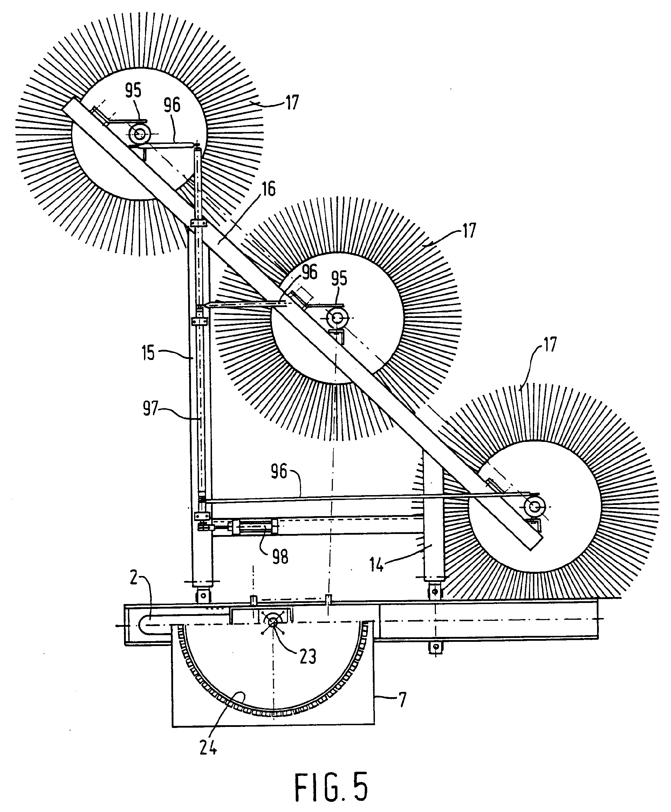

As is furthermore illustrated in Figures 4 and 5, the brush means 17 are adjustable with respect to the frame beams 16 supporting said brush means, about pivot pins 95 extending at least substantially perpendicularly to the intended direction of movement of the device, when seen in plan view. For this purpose the housings supporting the shafts of the brushes 17 carried by a beam 16 are coupled, by means of coupling rods 96, to a coupling shaft 97 located above the frame beam 15. Said coupling shaft 97 is rotatable about its longitudinal axis by means of a setting cylinder 98. From the Figures it will be apparent that upon rotation of the shaft 97 about its longitudinal axis the coupling rods 96 will be adjusted in their longitudinal direction, thus causing the brush means to pivot about the pivot pins 95. For operating the setting cylinders 98 use may be made of the pressurized water already being supplied to the device, which water can be supplied to or discharged from the setting cylinders via pipes (not shown) and control means incorporated in said pipe.

## Claims

1. A device for cleaning surfaces, said device being provided with a frame supported by ground wheels (2), which is to be driven by drive means, with brush means (17) supported by said frame, which are to be rotated by drive means, as well as with means for supplying water to said brush means, characterized in that the device is provided with a drive mechanism (24,25,26) to be operated by pressurized water, so as to drive the ground wheels (2) and the brush means (17), as well as with means for supplying the water used for operating the drive mechanism to said brush means (17).

2. A device according to claim 1, characterized in that the device is supported by at least one ground wheel (2) located near the centre of the device and that said brush means (17) are arranged on either side of said ground wheel (2).

3. A device according to claim 1 or 2, characterized in that said brush means (17) are to be arranged in the shape of a V, when seen in the direction of movement.

4. A device according to claim 1 or 2, characterized in that a number of brush means (17) are disposed on either side of the longitudinal central axis, said brush means being rotatable about axes of rotation extending at least substantially perpendicularly to the surface in question to be cleaned, whereby, when seen in the direction of movement, the brush means (17) are staggered with respect to each other, in such a manner, that the brush means overlap each other when seen in the direction of movement.

5. A device according to any one of the preceding claims, characterized in that the drive mechanism comprises a blade wheel (24) rotatably journalled in the frame, as well as spray nozzles (26), by means of which pressurized water can be squirted against the blades (25) of the blade wheel (24).

6. A device according to claim 5, characterized in that the blade wheel (24) is disposed so as to be rotatable about a vertically extending axis of rotation.

7. A device according to claim 5 or 6, characterized in that the blade wheel (24) is disposed in a trough (7), to which a discharge pipe is connected, and that pipes extending in the direction of the brushes (17) are connected to said discharge pipe.

8. A device according to any one of the preceding claims, characterized in that the drive means comprise two friction rollers co-operating with a ground wheel (2), which can be driven in opposite directions and which are vertically adjustable, in such a manner that the one or the other friction wheel, as desired, can be brought into contact with the ground wheel (2).

9. A device according to any one of the preceding claims, characterized in that said drive means are provided with a reversing mechanism for reversing the direction of rotation of the brush means (17).

10. A device according to any one of the preceding claims 1 - 7, characterized in that the drive mechanism and the means for supplying pressurized water to the drive mechanism are constructed in such a manner, that the drive mechanism can be driven in two opposite directions by changing the direction in which the water is supplied.

11. A device according to claim 10, characterized in that the drive mechanism comprises a blade wheel with two rows of blades (71,72), which are directed in opposite directions with respect to each other, all this in such a manner that when pressurized water is supplied via the one set of spray nozzles (74) the blade wheel (24) will be rotated in the one direction and that when pressurized water is supplied via the other set of spray nozzles (76) the blade wheel (24) will be rotated in the opposite direction.

12. A device according to any one of the preceding claims, characterized in that a friction wheel, which co-operates with a ground wheel (2) supporting the device, is driven from the drive mechanism and that means are provided for adjusting the belt tension of the belt transmission, (86).

13. A device according to any one of the preceding claims, characterized in that the brush means (17) are adjustable about pivot pins (13) which, when seen in plan view, extend at least substantially perpendicularly to the intended direction of movement of the device.

14. A device according to claim 13, characterized in that the brush means (17) are connected, by means of coupling rods (22), to a setting cylinder, by means of which the brush means (17) can be pivoted about the pivot pins (13).

15. A device according to claim 14, characterized in that the setting cylinder (98) can be operated by means of pressurized water.

16. A device according to any one of the preceding claims, characterized in that the frame parts (16) supporting the brush means (17) are vertically adjustable.

## Patentansprüche

1. Gerät zum Reinigen von Oberflächen, mit einem Gestell, das durch Laufräder (2) abgestützt ist, die durch einen Antrieb anzutreiben sind, mit Bürsten (17), die durch das Gestell abgestützt und durch einen Antrieb rotierend anzutreiben sind, sowie mit einer Vorrichtung zum Zuführen von Wasser zu den Bürsten,
dadurch gekennzeichnet, daß das Gerät mit einem durch Wasserdruck zu betätigenden Antriebsmechanismus (24, 25, 26) zum Antrieb der Laufräder (2) und der Bürsten (17) sowie mit einer Vorrichtung zum Zuführen des zum Betätigen des Antriebsmechanismus verwendeten Wassers zu den Bürsten (17) versehen ist.

2. Gerät nach Anspruch 1,
dadurch gekennzeichnet, daß das Gerät durch mindestens ein nahe der Mitte des Gerätes angeordnetes Laufrad (2) abgestützt ist, und daß die Bürsten (17) beiderseits des Laufrades (2) angeordnet sind.

3. Gerät nach Anspruch 1 oder 2,
dadurch gekennzeichnet, daß die Bürsten (17) in Fahrtrichtung gesehen V-förmig anzuordnen sind.

4. Gerät nach Anspruch 1 oder 2,
dadurch gekennzeichnet, daß beiderseits der Längsmittelachse eine Anzahl von Bürsten (17) angeordnet ist, die um Drehachsen drehbar sind, die sich zumindest im wesentlichen senkrecht zu der jeweiligen zu reinigenden Oberfläche erstrecken, wobei die Bürsten (17) in Fahrtrichtung gesehen gestaffelt zueinander derart angeordnet sind, daß sie sich in Fahrtrichtung gesehen gegenseitig überlappen.

5. Gerät nach einem der vorhergehenden Ansprüche,
dadurch gekennzeichnet, daß der Antriebsmechanismus ein drehbar in dem Gestell gelagertes Schaufelrad (24) sowie Sprühdüsen (26) aufweist, mittels derer Wasser unter Druck gegen die Schaufeln (25) des Schaufelrades (24) zu spritzen ist.

6. Gerät nach Anspruch 5,
dadurch gekennzeichnet, daß das Schaufelrad (24) derart angeordnet ist, daß es um eine vertikal gerichtete Drehachse drehbar ist.

7. Gerät nach Anspruch 5 oder 6,
dadurch gekennzeichnet, daß das Schaufelrad (24) in einem Trog (7) angeordnet ist, an den eine Abflußleitung angeschlossen ist, und daß in Richtung der Bürsten (17) verlaufende Leitungen an die Abflußleitung angeschlossen sind.

8. Gerät nach einem der vorhergehenden Ansprüche,
dadurch gekennzeichnet, daß der Antrieb zwei mit einem Laufrad (2) zusammenwirkende Reibräder aufweist, die in entgegengesetzte Richtung anzutreiben und vertikal derart verstellbar sind, daß nach Belieben das eine oder das andere Reibrad in Kontakt mit dem Laufrad (2) zu bringen ist.

9. Gerät nach einem der vorhergehenden Ansprüche,
dadurch gekennzeichnet, daß der Antrieb einen Reversiermechanismus zum Reversieren der Drehrichtung der Bürsten (17) aufweist.

10. Gerät nach einem der Ansprüche 1 bis 7,
dadurch gekennzeichnet, daß der Antriebsmechanismus und die Vorrichtung zum Zuführen von Druckwasser zu dem Antriebsmechanismus derart ausgebildet sind, daß der Antriebsmechanismus durch Ändern der Zuführrichtung des Wassers in zwei entgegengesetzte Richtungen anzutreiben ist.

11. Gerät nach Anspruch 10,
dadurch gekennzeichnet, daß der Antriebsmechanismus ein Schaufelrad mit zwei Reihen von Schaufeln (71, 72) aufweist, die relativ zueinander entgegengesetzt ausgerichtet sind, derart, daß das Schaufelrad (24) bei Zuführen von Druckwasser über den einen Satz Sprühdüsen (74) in die eine Richtung und bei Zuführen von Druckwasser über den anderen Satz Sprühdüsen (76) in die entgegengesetzte Richtung gedreht wird.

12. Gerät nach einem der vorhergehenden Ansprüche,
dadurch gekennzeichnet, daß ein Reibrad, das mit einem das Gerät abstützenden Laufrad (2) zusammenwirkt, von einem Antriebsmechanismus angetrieben ist, und daß eine Vorrichtung zum Einstellen der Riemenspannung des Riementriebes (86) vorgesehen ist.

13. Gerät nach einem der vorhergehenden Ansprüche,
dadurch gekennzeichnet, daß die Bürsten (17) um Gelenkstifte (13) verstellbar sind, die sich in Draufsicht zumindest im wesentlichen senkrecht zur Fahrtrichtung des Gerätes erstrecken.

14. Gerät nach Anspruch 13,
dadurch gekennzeichnet, daß die Bürsten (17) mittels Verbindungsstangen (22) mit einem Stellzylinder verbunden sind, mittels dessen die Bürsten (17) um die Gelenkstifte (13) zu schwenken sind.

15. Gerät nach Anspruch 14,
dadurch gekennzeichnet, daß der Stellzylinder (98) mittels Druckwasser zu betätigen ist.

16. Gerät nach einem der vorhergehenden Ansprüche,
dadurch gekennzeichnet, daß die die Bürsten (17) tragenden Gestellteile (16) vertikal verstellbar sind.

## Revendications

1. Dispositif pour le nettoyage de surfaces, ce dispositif comportant un châssis supporté par des roues de roulage (2), entraîné par un moyen d'entraînement, comprenant des moyens à brosses (17) supportés par le dit châssis et destinés à être entraînés en rotation par des moyens d'entraînement, ainsi que des moyens pour l'alimentation en eau des dits moyens à brosses, caractérisé en ce que le dispositif est équipé d'un mécanisme d'entraînement (24,25,26) destiné à être actionné par de l'eau sous pression, afin d'entraîner les roues de roulage (2) et les moyens à brosses (7), ainsi que d'un moyen pour alimenter le dit moyen à brosses (17) en eau servant pour son actionnement.

2. Dispositif selon la revendication 1, caractérisé en ce qu'il est supporté par au moins une roue de roulage (2) disposée près du centre du dispositif, et en ce que les dits moyens à brosses (17) sont disposés de chaque côté de la dite roue de roulage (2).

3. Dispositif selon la revendication 1 ou 2, caractérisé en ce que les dits moyens à brosses (17) sont disposés pour former un V lorsqu'on regarde dans la direction du déplacement.

4. Dispositif selon la revendication 1 ou 2, caractérisé en ce que plusieurs moyens à brosses (17) sont disposés de chaque côté de l'axe central longitudinal, les dits moyens à brosses pouvant tourner autour d'axes de rotation dirigés au moins pratiquement perpendiculairement à la surface en question à nettoyer de sorte que, en regardant dans la direction du déplacement, les moyens à brosses (17) sont décalés les uns par rapport aux autres de façon à se chevaucher l'un l'autre lorsqu'on regarde dans la direction du déplacement.

5. Dispositif selon l'une quelconque des revendications précédentes, caractérisé en ce que le mécanisme d'entraînement comprend une roue à aubes (24), montée pour tourner dans le châssis, ainsi que des buses de pulvérisation (26) grâce auxquelles de l'eau sous pression peut jaillir contre les lames (25) de la roue à aubes (24).

6. Dispositif selon la revendication 5, caractérisé en ce que la roue à aubes (24) est disposée pour tourner autour d'un axe de rotation vertical.

7. Dispositif selon la revendication 5 ou 6, caractérisé en ce que la roue à aubes (24) est disposée dans une cuve (7) à laquelle est relié un tube de déversement, et en ce que des tuyaux orientés dans la direction des brosses (17) sont reliés au dit tube de déversement.

8. Dispositif selon l'une quelconque des revendications précédentes, caractérisé en ce que le moyen d'entraînement comprend deux roues de friction coopérant avec une roue de roulage (2), lesquelles roues de friction peuvent être entraînées dans des directions opposées et sont réglables en direction verticale, de telle façon que l'une ou l'autre des roues de friction peut, à volonté, être mise en contact avec la roue de roulage (2).

9. Dispositif selon l'une quelconque des revendications précédentes, caractérisé en ce que le moyen d'entraînement est équipé d'un mécanisme inverseur pour inverser le sens de rotation des moyens à brosses (17).

10. Dispositif selon l'une quelconque des revendications 1 à 7, caractérisé en ce que le mécanisme d'entraînement et le moyen d'alimentation du mécanisme d'entraînement en eau sous pression sont réalisés de telle façon que le mécanisme d'entraînement peut être entraîné dans deux directions opposées par modification de la direction d'alimentation en eau.

11. Dispositif selon la revendication 10, caractérisé en ce que le mécanisme d'entraînement comprend une roue à aubes à deux rangées de lames (71,72), qui sont orientées en directions opposées l'une par rapport à l'autre, de telle façon que, lors de l'alimentation en eau sous pression par l'intermédiaire d'un jeu de buses de pulvérisation (74), la roue à aubes (24) est entraînée en rotation dans une direction et que, lors de l'alimentation en eau sous pression par l'intermédiaire de l'autre jeu de buses de pulvérisation (76), la roue à aubes (24) est entraînée en rotation dans la direction opposée.

12. Dispositif selon l'une quelconque des revendications précédentes, caractérisé en ce qu'une roue à friction, qui coopère avec une roue de roulage (2) supportant le dispositif, est entraînée à partir du mécanisme d'entraînement, et en ce que des moyens sont prévus pour régler la tension de courroie de la transmission par courroie (86).

13. Dispositif selon l'une quelconque des revendications précédentes, caractérisé en ce que les moyens à brosses (17) sont réglables autour d'axes de pivotement (13) qui, regardés en plan, sont dirigés au moins pratiquement perpendiculairement à la direction voulue de déplacement du dispositif.

14. Dispositif selon la revendication 13, caractérisé en ce que les moyens à brosses (17) sont reliés, par des tiges de liaison (22), à un cylindre de réglage grâce auquel on peut faire pivoter les moyens à brosses (17) autour des axes de pivotement (13).

15. Dispositif selon la revendication 14, caractérisé en ce que le cylindre de réglage (98) peut être actionné par de l'eau sous pression.

16. Dispositif selon l'une quelconque des revendications précédentes, caractérisé en ce que les parties de châssis (16) qui supportent les moyens à brosses (17) sont réglables verticalement.
